## Europäisches Patentamt
## European Patent Office
## Office européen des brevets

(19)

(11) Veröffentlichungsnummer: **0 011 856**
**B1**

(12) # EUROPÄISCHE PATENTSCHRIFT

(45) Veröffentlichungstag der Patentschrift:
24.03.82

(21) Anmeldenummer: **79104739.2**

(22) Anmeldetag: **28.11.79**

(51) Int. Cl.³: **F 41 F 23/32**, F 16 B 1/00

(54) **Vorrichtung zum Verriegeln eines um eine liegende Drehachslinie drehbaren Trägers einer der Höhe nach richtbaren Waffe, z. B. einer Schnellfeuerkanone.**

(30) Priorität: **29.11.78 DE 2851604**

(43) Veröffentlichungstag der Anmeldung:
**11.06.80 Patentblatt 80/12**

(45) Bekanntmachung des Hinweises auf die Patenterteilung:
**24.03.82 Patentblatt 82/12**

(84) Benannte Vertragsstaaten:
**BE CH DE FR GB IT NL**

(56) Entgegenhaltungen:
**CH-A-33 927**
**DE-C-215 080**
**DE-C-699 159**
**DE-C-728 687**
**FR-A-2 109 750**
**US-A-2 395 893**
**US-A-2 518 531**
**US-A-2 837 664**

(73) Patentinhaber: **Industrie-Werke Karlsruhe Augsburg Aktiengesellschaft, Gartenstrasse 71, D-7500 Karlsruhe 1 (DE)**

(72) Erfinder: **Kausträter, Gert, Ing.-grad., Breslauer Strasse 3, D-8900 Augsburg (DE)**

(74) Vertreter: **Lemke, Jörg-Michael, Dipl.-Ing., Wolframstrasse 9, D-8900 Augsburg (DE)**

Vorrichtung zum Verriegeln eines um eine liegende Drehachslinie drehbaren Trägers einer der Höhe nach richtbaren Waffe, z. B. einer Schnellfeuerkanone

Die Erfindung betrifft eine Vorrichtung zum Verriegeln eines um eine liegende Drehachslinie drehbaren Trägers einer der Höhe nach richtbaren Waffe, z. B. einer Schnellfeuerkanone, gegenüber einem ihn an der Aussenseite tragenden Teil eines in einem Fahrzeug um eine stehende Drehachslinie drehbaren Turmes, bestehend aus Bohrung und Bolzen, an dessen freiem Ende ein um etwa 180° schwenkbarer Drehhandgriff sitzt, der unter Federdruck axial bewegbar ist und längs einer schraubenförmigen Bahn in einem den Bolzen umfassenden Gehäuse geführt ist.

Bei dem Fahrzeug kann es sich um ein gepanzertes Rad-, Halb- oder Vollkettenfahrzeug mit einem im Vollkreis drehbaren Turm handeln. Die Vorrichtung zum Verriegeln ermöglicht es, die Waffe wahlweise in der Nullstellung («Zurrstellung») des Waffenträgers festzusetzen oder in eine beliebige Schussstellung zu überführen.

Unabhängig vom Gefechtsfall sind gepanzerte Rad-, Halb- oder Vollkettenfahrzeuge allein aus geländespezifischen Gründen erheblichen mechanischen Beanspruchungen ausgesetzt. Derartige Beanspruchungen erfordern beispielsweise eine aufbewahrsichere Anordnung der Munition für die Bordwaffen im Fahrzeug-Inneren.

In gleicher Weise gilt dies auch für die Bordwaffe(n), insbesondere eine fahrzeugeigene Schnellfeuerkanone: diese bedarf bei Fahrten sowohl im Gelände als auch auf der Strasse einer sorgfältigen und sicheren Fixierung in ihrer Null- oder «Zurrstellung». Andererseits muss aber, etwa bei bevorstehendem Waffeneinsatz, gewährleistet sein, dass die Bordwaffe binnen kürzester Zeit in Feuerbereitschaft ist. Dies wiederum erfordert, dass die Fixierung der Waffe in der Null- oder «Zurrstellung» schnellstmöglichst aufgehoben werden kann.

Die eingangs genannte Vorrichtung zum Verriegeln leidet unter dem Mangel, dass sie infolge ihrer Anordnung am Äusseren des Fahrzeugs bzw. Fahrzeugturms auch nur von dort aus in oder ausser Funktion gebracht werden kann. Zu diesem Zweck ist es erforderlich, dass sich ein Soldat der Besatzung ausserhalb des fahrzeug- bzw. turmeigenen Panzerschutzes begibt. Die sich daraus zwangsläufig ergebende Gefährdung des die Vorrichtung zum Verriegeln bedienenden Soldaten ist als erheblicher Nachteil zu werten.

Die der Erfindung zugrundeliegende Aufgabe wird darin gesehen, eine Vorrichtung zum Verriegeln der genannten Bauart zu schaffen, die es dem die Vorrichtung bedienenden Besatzungsmitglied erlaubt, den Panzerschutz nicht mehr zu verlassen, und die darüberhinaus auf besonders einfache, rasche und problemlose Weise die Verriegelung bewirkt, ohne dass die genau korrespondierende Lage der Paarung aus Bohrung und Bolzen in Augenschein genommen werden müsste.

Diese Aufgabe wird erfindungsgemäss dadurch gelöst, dass die Bohrung am Waffenträger angeordnet ist und das Bolzengehäuse in der Haube des Turmes sitzt und in dessen Inneres ragt, und dass ferner die schraubenförmige Bahn in einer Kulisse enthalten ist, die zwischen den Rast-Endstellungen für die Verriegelung und für die Entriegelung eine Zwischenraststellung für den Bolzen zum Auflaufen desselben beim Drehen des Waffenträgers auf Anlaufflächen aufweist, welche die Bohrung am Waffenträger im Eingriffsbereich des Bolzens flankieren, wobei die mit dem Auflaufen des Bolzens erzeugte Axialbewegung den Druck der Feder überwinden und einen mit ihm fest verbundenen Indexstift sich durch die Kulisse in die Verriegelungsstellung zwangsteuern lässt.

Dadurch, dass das Bolzengehäuse in der Haube des Turmes sitzt und in dessen Inneres ragt, wobei ferner auch die Kulisse innerhalb der Turmhaube angeordnet ist, entfällt eine Gefährdung des die Verriegelungsvorrichtung bedienenden Soldaten in dem weiter oben erläuterten Sinne, unabhängig davon, ob verriegelt oder entriegelt werden soll. Soll verriegelt werden, dann braucht entsprechend der erfindungsgemässen Ausbildung die Vorrichtung nur in die Zwischenraststellung für den Bolzen gebracht zu werden. Sobald beim Absenken oder Anheben des Waffenträgers durch Drehen desselben der Bolzen auf die eine oder die andere Anlauffläche anläuft, entsteht naturgemäss eine Axialbewegung des Bolzens, die sich auch dem mit ihm fest verbundenen Indexstift mitteilt. Dieser Indexstift wird durch die Kulisse in die Verriegelungsstellung zwangsgesteuert. Ohne weitere Mitwirkung der für die Vorrichtung zum Verriegeln verantwortlichen Person ergibt sich somit eine sehr einfache, rasche und problemlose Verriegelung im Blindgang.

Vorteilhaft ist mit dem Bolzen ein Arm fest verbunden, der in der Verriegelungsstellung auf einen turmfesten Signalkopf stösst und seine einwandfreie Ankunft in der Verriegelungsstellung signalisiert.

Ferner sind die Bohrung und der Bolzen zweckmässig schwach konisch ausgebildet, um das automatische Verriegeln noch dadurch zusätzlich zu erleichtern, dass zu Beginn des Verriegelns die Stirnfläche des Bolzens im Durchmesser kleiner ist als die Maulöffnung der Bohrung, die dieser gegenüberliegt. Im Zustand der Paarung ergibt dies den weiteren Vorteil einer spielfreien Verriegelung, die auch bei Verschleisserscheinungen noch wirksam ist.

Die Kulisse weist vorteilhaft eine schräge, der Zwischenraststellung axial gegenüberliegende Zwangssteuerfläche auf, die den Indexstift bei dessen Axialbewegung in Richtung auf die Verriegelungsstellung verschwenkt. Sobald der Bolzen unter Federdruck in die Bohrung eintreten kann, bewegt er sich axial wieder in entgegengesetzter Richtung, wodurch der Indexstift in die Rast-Endstellung für die Verriegelung gelangt.

Diese Bewegungen erfolgen völlig selbsttätig.

Die Erfindung und ihre vorteilhaften Ausgestaltungen sind im folgenden anhand eines in der Zeichnung dargestellten Ausführungsbeispiels näher erläutert.

Es zeigt:

Fig. 1 den Turm eines – nicht weiter dargestellten – Panzerfahrzeugs mit Waffenträger und Schnellfeuerkanone in Seitenansicht,

Fig. 2 den Turm nach Fig. 1 von hinten, d. h. in Fahrtrichtung,

Fig. 3 einen Vertikalschnitt durch die dem Festsetzen oder Lösen des Waffenträgers dienende Verriegelungsvorrichtung,

Fig. 4 ein Schema der Schaltstellungen des Drehhandgriffs der Vorrichtung nach Fig. 3, und schliesslich

Fig. 5 eine als Zwangssteuerung ausgebildete Kulissenführung mit definierten Raststellungen.

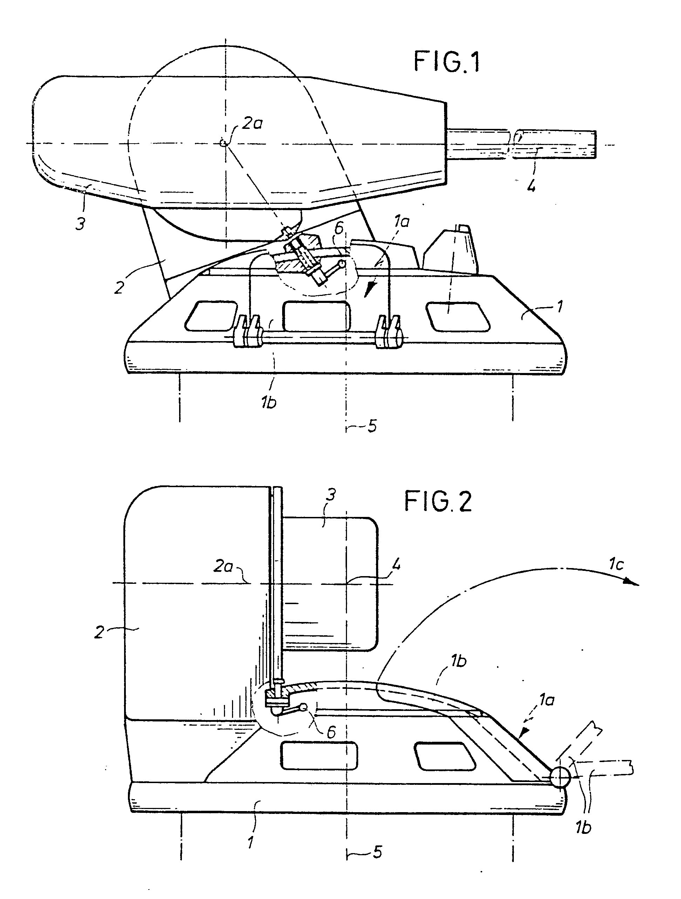

Auf einem nicht weiter dargestellten Rad-, Halb- oder Vollkettenfahrzeug ist ein Turm 1 in an sich bekannter Weise um eine stehende Drehachslinie 5 drehbar angeordnet. Fest mit dem Turm 1 ist an dessen Aussenseite ein Waffenständer 2 verbunden. An dem Waffenständer 2 ist ein Waffenträger 3 um eine liegende Drehachslinie 2a höhenrichtbar gelagert. In diesem Waffenträger 3 ist die Bordwaffe, beispielsweise eine Schnellfeuerkanone 4, angeordnet. Um ein Ziel aufzufassen, erfolgt das Richten der Waffe der Seite nach dementsprechend durch ein Verschwenken des Turmes 1 um dessen stehende Drehachslinie 5. Der Höhe nach wird die Waffe durch Verschwenken des am Waffenständer 2 um die liegende Drehachslinie 2a schwenkbaren Waffenträgers 3 gerichtet. Eine in Fahrtrichtung auf der dem Waffenständer 2 gegenüberliegenden Seite angeordnete Luke 1a ist mittels eines Deckels 1b verschliessbar; der Öffnungsradius des Deckels 1b ist durch den Pfeil 1c symbolisiert (Fig. 2).

Die Vorrichtung zum Verriegeln des Waffenträgers 3 gegenüber dem Waffenständer 2 bzw. dem Turm 1 besteht aus einer Bohrung 10b und einem Bolzen 8, an dessen freiem Ende ein um etwa 180° schwenkbarer Drehhandgriff 6 sitzt, der unter dem Druck der Feder 9 axial bewegbar ist und längs einer schraubenförmigen Bahn in einem den Bolzen umfassenden Gehäuse 7 geführt ist.

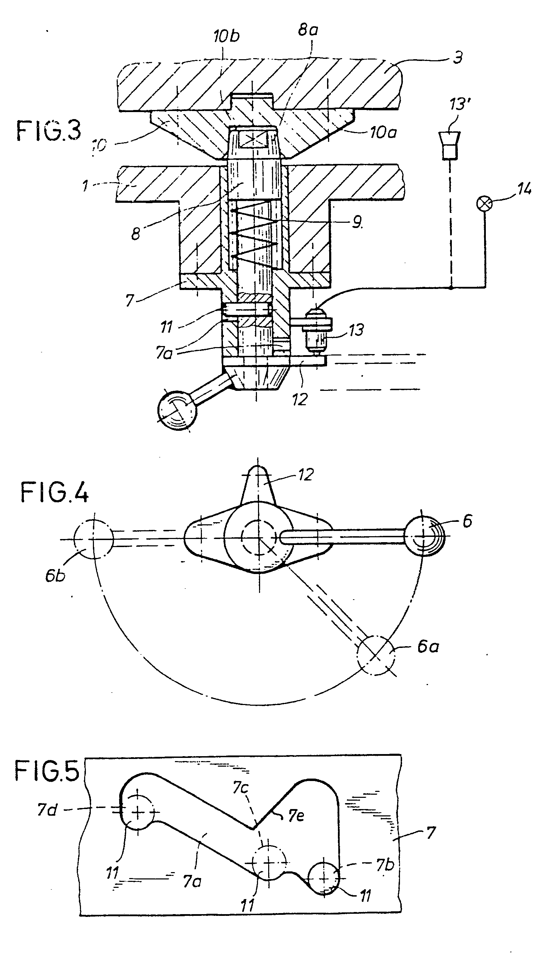

Erfindungsgemäss ist die Bohrung 10b am Waffenträger 3 angeordnet. Das Bolzengehäuse 7 sitzt in der Haube des Turmes 1 und ragt in dessen Inneres. Die schraubenförmige Bahn ist ferner in einer Kulisse 7a enthalten (siehe Fig. 3 und 5), die zwischen den Rast-Endstellungen 7b für die Verriegelung und 7d für die Entriegelung eine Zwischenraststellung 7c den Bolzen 8 zum Auflaufen desselben beim Drehen des Waffenträgers 3 auf Anlaufflächen 10a aufweist, welche die Bohrung 10b am Waffenträger 3 im Eingriffsbereich des Bolzens 8 flankieren. Bei der gezeigten, bevorzugten Ausführungsform sind die Anlaufflächen 10a an einer am Waffenträger 3 befestigten Festsetzleiste 10 vorgesehen. Dabei lässt die mit dem Auflaufen des Bolzens 8 erzeugte Axialbewegung den Druck der Feder 9 überwinden und einen mit ihm fest verbunden Indexstift 11 sich durch die Kulisse 7a in die Verriegelungsstellung 7b zwangssteuern.

Der Indexstift 11 ist quer zum Bolzen 8 angeordnet und läuft in der aus den Fig. 3 und 5 hervorgehenden Weise in der Kulisse 7a des Bolzengehäuses 7. In Fig. 4 ist einerseits der Drehhandgriff 6 und in Fig. 5 andererseits der Indexstift 11 jeweils in seinen drei definierten Raststellungen dargestellt, wobei die jeweils einander entsprechenden Stellungen 6 und 7b dem Festsetzen bzw. Zurren, die Stellungen 6a und 7c dem Teilentriegeln bzw. Teilentzurren (sog. Zwischenraststellung) und schliesslich die Stellungen 6b und 7d dem Entriegeln bzw. Entzurren des an seinem oberen Ende 8a schwach konisch ausgebildeten Bolzens 8 in bezug auf die entsprechend ausgebildete und in der Festsetzleiste angeordnete Ausnehmung 10b dienen.

Bei der gezeigten, bevorzugten Ausführungsform weist die Kulisse 7a eine schräge, der Zwischenraststellung 7c axial gegenüberliegende Zwangssteuerfläche 7e auf. Soll die erfindungsgemässe Vorrichtung in die Verriegelungsstellung gebracht werden, in der sich der Indexstift 11 in der Stellung 7b befindet, dann braucht der die Verriegelungsvorrichtung bedienende Soldat den Drehhandgriff 6 lediglich aus der Stellung 6b (Fig. 4), die der Entriegelungsstellung 7d des Indexstiftes 11 entspricht, in die Stellung 6a verbringen, die der Teilentriegelungsstellung 7c des Indexstifts 11 entspricht. In diesem Zusammenhang ist darauf hinzuweisen, dass in Fig. 5 die Oberkante der Kulisse 7a nach unten, die Unterkante der Kulisse hingegen nach oben, bezogen auf Fig. 3, gewendet ist. Wird nun der Waffenträger 3 zwecks Verriegelns um die liegende Drehachslinie 2a verschwenkt, um die Bohrung 10b und den Konus 8a des Bolzens 8 in Eingriff miteinander zu bringen, dann läuft entweder die eine oder die andere Anlauffläche 10a der Festsetzleiste 10, je nachdem, ob der Waffenträger 3 nach oben oder nach unten geschwenkt wird, an dem Konus 8a auf, der in der Zwischenraststellung 7c eine gewisse Länge über die Oberfläche des Turms 1 hervorragt. Dabei entsteht naturgemäss entgegen der Kraft der Schraubendruckfeder 9 eine Axialbewegung des Bolzens 8 in Fig. 3 nach unten, die sich dem Indexstift 1 mitteilt. Daraus folgt, dass der Indexstift 11 an der Zwangssteuerfläche 7c anschlägt und bei weiterer Axialbewegung des Bolzens 8 in Richtung auf die Verriegelungsstellung 7b verschwenkt wird, in Fig. 5 gesehen also nach rechts. Sobald der Bolzen 8 bzw. sein Konus 8a in die Bohrung 10b eingreift und sich unter der Wirkung der Schraubendruckfeder 9 somit axial in entgegengesetzter Richtung bewegen kann, bewegt sich auch der Indexstift 11 in entsprechender Richtung und rastet zwangsläufig gemäss Fig. 5 in der mit ausgezogenen Linien gezeigten Stellung ein. In dieser Verriegelungsstellung 7b werden sowohl der Bolzen 8 als auch der Indexstift 11 durch die Wirkung der Schraubendruckfeder 9 gehalten.

Die Erfindung gewährleistet somit eine sehr einfache, rasche und problemlose Verriegelung sozusagen im Blindgang, ohne dass der die Verriegelung betätigende Soldat mehr tun muss, als den Drehhandgriff 6 aus der Stellung 6b, die der Entriegelungsstellung 7d des Indexstifts 11 entspricht, in die Stellung 6a zu verbringen, die der Zwischenraststellung 7c des Indexstifts 11 entspricht.

Zweckmässig ist mit dem Bolzen 8 ein Arm 12 fest verbunden, der in der Verriegelungsstellung 7b auf einen turmfesten Signalkopf 13 stösst und die einwandfreie Verriegelung mittels eines akustischen und/oder optischen Signals 13', 14 signalisiert, durch das dem Kommandanten oder dem Richtschützen angezeigt wird, dass der Waffenträger 3 mit der Schnellfeuerkanone 4 verriegelt bzw. gezurrt ist. Im umgekehrten Falle, wenn also das akustische Signal verstummt und/oder die optische Anzeige erlischt, vermag die Besatzung zu erkennen, dass die mechanische Verblockung zwischen Turm 1 und Waffenträger 3 aufgehoben ist bzw. sich in der Teilentriegelungsstellung befindet.

Soll die Schnellfeuerkanone 4 aus der Verriegelungsstellung 7b in Feuerbereitschaft versetzt werden, so wird der Drehhandgriff 6 in die Stellung 6b überführt, in welcher sich der Indexstift 11 wieder in der Entriegelungsstellung 7d befindet. Hierbei gelangt der Konus 8a des Bolzens 8 durch die erfolgende Axialverschiebung ausser Eingriff mit der Bohrung 10b der Festsetzleiste 10. Die dabei erforderliche Axialbewegung in Fig. 3 nach unten entgegen der Kraft der den Schaft des Bolzens 8 umgebenden Schraubenfeder 9 wird ersichtlich von dem in der Kulisse 7a geführten Indexstift 11 gesteuert, der sich dabei in die Entriegelungsstellung 7d begibt.

Der Vollständigkeit halber wird darauf hingewiesen, dass es sich bei der Darstellung in Fig. 5 natürlich um eine Abwicklung der Kulisse 7a handelt, die gemäss Fig. 3 in der Wendung des Bolzengehäuses 7 verläuft und sich somit in Umfangsrichtung desselben erstreckt.

Ferner ist darauf hinzuweisen, dass es ggf. möglich wäre, auf den gesonderten Drehhandgriff 6 zu verzichten und stattdessen den Indexstift 11 derart lang auszubilden, dass er als Handhabe bzw. als Drehhandgriff dienen kann.

**Patentansprüche**

1. Vorrichtung zum Verriegeln eines um eine liegende Drehachslinie drehbaren Trägers einer der Höhe nach richtbaren Waffe, z. B. einer Schnellfeuerkanone, gegenüber einem ihn tragenden Teil an der Aussenseite eines in einem Fahrzeug um eine stehende Drehachslinie drehbaren Turmes, bestehend aus Bohrung und Bolzen, an dessen freiem Ende ein um etwa 180° schwenkbarer Drehhandgriff sitzt, der unter Federdruck axial bewegbar ist und längs einer schraubenförmigen Bahn in einem den Bolzen umfassenden Gehäuse geführt ist, dadurch gekennzeichnet,

dass die Bohrung (10b) am Waffenträger (3) angeordnet ist und das Bolzengehäuse (7) in der Haube des Turmes (1) sitzt und in dessen Inneres ragt, und dass ferner die schraubenförmige Bahn in einer Kulisse (7a) enthalten ist, die zwischen den Rast-Endstellungen (7b) für die Verriegelung und (7d) für die Entriegelung eine Zwischenraststellung (7c) für den Bolzen (8) zum Auflaufen desselben beim Drehen des Waffenträgers (3) auf Anlaufflächen (10a) aufweist, welche die Bohrung (10b) am Waffenträger (3) im Eingriffsbereich des Bolzens (8) flankieren, wobei die mit dem Auflaufen des Bolzens (8) erzeugte Axialbewegung den Druck der Feder (9) überwinden und einen mit ihm fest verbundenen Indexstift (11) sich durch die Kulisse in die Verriegelungsstellung (7b) zwangssteuern lässt.

2. Vorrichtung nach Anspruch 1, dadurch gekennzeichnet, dass mit dem Bolzen (8) ein Arm (12) fest verbunden ist, der in der Verriegelungsstellung auf einen turmfesten Signalknopf (13) stösst.

3. Vorrichtung nach Anspruch 1 oder 2, dadurch gekennzeichnet, das die Bohrung (10b) und der Bolzen (8) schwach konisch (8a) ausgebildet sind.

4. Vorrichtung nach einem der vorhergehenden Ansprüche, dadurch gekennzeichnet, dass die Kulisse (7a) eine schräge, der Zwischenraststellung (7c) axial gegenüberliegende Zwangssteuerfläche (7e) aufweist.

**Revendications**

1. Dispositif pour verrouiller un support tournant autour d'un axe de rotation horizontal pour une arme orientable en hauteur, par exemple pour un canon à tir rapide, par rapport à un élément qui le porte sur la face extérieure d'une tourelle tournant dans un véhicule autour d'un axe de rotation vertical, dispositif constitué par un alésage et une broche, à l'extrémité libre de laquelle est montée une poignée tournante pouvant pivoter de 180° environ, broche qui est déplaçable en direction axiale sous la poussée d'un ressort et qui est guidée le long d'une piste hélicoïdale dans un carter entourant la broche, dispositif caractérisé en ce que l'alésage (10b) est disposé sur le support (3) de l'arme et que le carter (7) de la broche est monté dans le capot de la tourelle (1) et s'avance à l'intérieur de celui-ci, et en outre en ce que la piste hélicoïdale est contenue dans une coulisse (7a) qui comporte, entre les positions extrêmes d'enclenchement, (7b) pour le verrouillage et (7d) pour le déverrouillage, une position d'enclenchement intermédiaire (7c) de la broche (8) pour l'approche de celle-ci, lors de la rotation du support (3) de l'arme, sur des surfaces d'approche (10a) flanquant l'alésage (10b) du support (3) de l'arme dans le domaine d'action de la broche (8), le mouvement en direction axiale produit avec l'approche de la broche (8) l'emportant sur la poussée du ressort (9) et commandant obligatoirement par la coulisse dans la position de verrouillage (7b) une cheville de positionnement (11) assemblée rigidement avec la broche.

2. Dispositif selon revendication 1, caractérisé en ce qu'un bras (12) est assemblé rigidement avec la broche (8), ce bras (12) butant, dans la position de verrouillage, sur un bouton de signalisation (13) solidaire de la tourelle.

3. Dispositif selon revendication 1 ou 2, caractérisé en ce que l'alésage (10b) et la broche (8) sont de forme faiblement conique (8a).

4. Dispositif selon l'une des revendications précédentes, caractérisé en ce que la coulisse (7a) présente une surface de commande imposée inclinée (7a) opposée en direction axiale à la position d'enclenchement intermédiaire (7c).

**Claims**

1. A device by which a support which is rotatable about a horizontal axis and which is supporting a weapon, e. g. a rapid-fire gun adjustable in height is to be locked relative to an element supporting said support and provided at the outside of a turret rotatable about a vertical axis in a vehicle, comprising a bore and a bolt at the free end of which is resting a handle which is pivotable about 180° and axially movable under spring pressure and which is guided along a helical path within a housing enclosing said bolt, characterized in that said bore (10b) is disposed on said weapon support (3), in that the bolt housing (7) is mounted in the hood of said turret (1) and extends into the interior of the latter, and in that said helical path is contained in a control link (7a) formed so that between its stop end positions (7b) for locking and (7d) for unlocking it has an intermediate stop position (7c) for the bolt (8) for running up of the same – when said weapon support (3) is being rotated – upon run-on surfaces (10a) which are flanking the bore (10b) at said weapon support (3) within the range of engagement of said bolt (8) so that the axial movement produced with the running up of said bolt (8) permits to overcome the pressure of said spring (9) and that an indexing pin (11) fixedly connected to said bolt can be positively directed by said control link into the locking position (7b).

2. The device according to claim 1, characterized in that to said bolt (8) is fixedly connected an arm (12) so that in the locking position said arm abuts a turret-fast signal button (13).

3. A device according to claim 1 or 2, characterized in that said bore (10b) and said bolt (8) are slightly conical (8a).

4. A device according to any of the preceding claims, characterized in that said control link (7a) has an inclined positive control surface (7e) axially opposite the intermediate stop position (7c).

0 011 856

FIG.1

FIG.2

0 011 865

FIG.3

FIG.4

FIG.5

9